# EUROPÄISCHE PATENTANMELDUNG

(11) **EP 1 628 202 A1**
(43) Veröffentlichungstag der Anmeldung: **22.02.2006**
(21) Anmeldenummer: 04019708.9
(22) Anmeldetag: 19.08.2004
(51) Int. Cl.: G06F 3/12

(54) **Daten-Ausgabe-System und Daten-Ausgabe-Verfahren mit Daten-Ausgabe-Überwachung**

(71) Anmelder: UBS AG, 8001 Zürich (CH)
(72) Erfinder: Dubach, Ernst, CH-5620 Bremgarten (CH); Codispoti, Guiseppe, 8041 Zürich (CH)
(74) Vertreter: Jehle, Volker Armin

(57) **Zusammenfassung**

Die Erfindung betrifft ein Daten-Ausgabe-Verfahren und ein Daten-Ausgabe-System (1), welches aufweist:
- eine Druckeinrichtung (3);
- eine Datenbank-Einrichtung (7), in welcher für eine Vielzahl von Daten-Ausgabe-System-Nutzem entsprechende Nutz- und/oder Steuerdaten gespeichert sind;
- eine Daten-Ausgabe-Steuereinrichtung (2), welche entsprechende Ausgabe-Daten-Sätze bereit- bzw. zusammenstellt, und an die Druckeinrichtung (3) liefert; und
- eine Einrichtung (100) zum Überwachung der Bereit- bzw. Zusammenstellung, und/oder der Lieferung der Ausgabe-Daten-Sätze an die Druckeinrichtung (3).

## Beschreibung

Die Erfindung betrifft ein Daten-Ausgabe-System mit einer Druckeinrichtung, einer Datenbank-Einrichtung, und einer Daten-Ausgabe-Steuereinrichtung, und ein Daten-Ausgabe-Verfahren.

Im Stand der Technik (z.B. von Banken, Versicherungen, etc.) benutzte Daten-Ausgabe-Systeme weisen z.B. eine Druckeinrichtung, eine Datenbank-Einrichtung, und - als Schnittstelle zwischen Druckeinrichtung, und Datenbank-Einrichtung - eine entsprechende Daten-Ausgabe-Steuereinrichtung auf.

Bei der Druckeinrichtung kann es sich z.B. um eine entsprechende Rotationsdruckmaschine handeln, z.B. eine Bogen-, bevorzugt eine Rollen-Rotationsdruckmaschine (z.B. um eine nach einem entsprechenden Hoch-, Flach- , oder Tiefdruckverfahren arbeitende (Ein- oder Mehrfarbendruck-) Rollen-Rotationsdruckmaschine).

Bei einer Rollen-Rotationsdruckmaschine läuft eine von einer entsprechenden Papier-Rolle abgerollte, zusammenhängende Papier-Bahn durch die Maschine, und wird erst nach dem Bedrucken und Trocknen geschnitten, ggf. gefalzt, und verpackt (z.B. kuvertiert).

In der Datenbank-Einrichtung können eine Vielzahl von Daten gespeichert sein, z.B. entsprechende Bank-Kundendaten (z.B. Vor- und Nachnamen, bzw. Firmennamen, Adressen, Informationen bzgl. der jeweils zu verwendenden Sprache, etc.), bankinteme Daten (z.B. bankinteme Adressen, etc.), usw., usw.

Die Daten-Ausgabe-Steuereinrichtung erzeugt - unter Verwendung der o.g. oder weiterer, in der Datenbank-Einrichtung (und/oder einer oder mehreren weiteren Datenbank-Einrichtungen) gespeicherten, und/oder von entsprechenden Daten-Liefer-Applikationen bereitgestellten Daten - entsprechende Daten-Satz-Druck-Files, die an die Druckeinrichtung geliefert, und dort ausgedruckt werden.

Bei den o.g. weiteren Daten kann es sich z.B. um entsprechende Kontostand-Daten, Konto-Bewegungs-Daten (Konto-Umbuchungs-Daten, Zins-Zahlungs-Daten, Konto-Dienstleistungspreis-Daten), etc. handeln, oder z.B. um Depot-Stand-Daten, Depot-Bewegungs-Daten (Ankaufs-, Verkaufs-, Dividenden- / Zins-Zahlungs-Daten, Depot-Dienstleistungspreis-Daten) usw., usw.

Zu bestimmten Zeiten - insbesondere am Monatsende - kann es - insbesondere bei Daten-Ausgabe-Systemen von Großbanken - zu einem äußerst hohen Druckaufkommen kommen.

Beispielsweise können am Monatsende - ggf. automatisch ausgelöste - Daten-Ausgabe-Aufträge z.B. zum Ausdruck mehrerer tausend Kontoauszüge, mehrerer tausend Depotauszüge, etc., etc. führen.

Ist der Ausdruck fehlerhaft, entstehen relativ hohe Kosten, da ggf. der - gesamte - Ausdruck nochmals getätigt werden muß.

Die Erfindung hat zur Aufgabe, ein neuartiges Daten-Ausgabe-System, und ein neuartiges Daten-Ausgabe-Verfahren zur Verfügung zu stellen, insbesondere ein neuartiges Daten-Ausgabe-System, und ein neuartiges Daten-Ausgabe-Verfahren, mit dem die o.g. und/oder weitere Nachteile des Stands der Technik überwunden werden können.

Sie erreicht dieses und weitere Ziele durch die Gegenstände der Ansprüche 1, 16 und 17. Vorteilhafte Weiterbildungen der Erfindung sind in den Unteransprüchen angegeben.

Gemäß einem Grundgedanken der Erfindung wird ein Daten-Ausgabe-System bereitgestellt, welches aufweist:
- eine Druckeinrichtung;
- eine Datenbank-Einrichtung, in welcher für eine Vielzahl von Daten-Ausgabe-System-Nutzem entsprechende Nutz- und/oder Steuerdaten gespeichert sind;
- eine Daten-Ausgabe-Steuereinrichtung, welche entsprechende Ausgabe-Daten-Sätze bereit- bzw. zusammenstellt, und an die Druckeinrichtung liefert; und
- eine Einrichtung zum Überwachung der Bereit- bzw. Zusammenstellung, und/oder der Lieferung der Ausgabe-Daten-Sätze an die Druckeinrichtung.

Durch das Überwachen der Bereit- bzw. Zusammenstellung, und/oder der Lieferung der Ausgabe-Daten-Sätze an die Druckeinrichtung können ggf. auftretende Fehler frühzeitig - noch vor dem Ausdrucken der Daten-Sätze - erkannt, und behoben werden.

Die Erfindung wird nun anhand mehrerer Ausführungsbeispiele sowie der beigefügten Zeichnung näher erläutert. In der Zeichnung zeigt:
- Fig. 1: ein Daten-Ausgabe-System gemäß einem Ausführungsbeispiel der vorliegenden Erfindung;
- Fig. 2: ein Flussdiagramm zur Veranschaulichung von bei einem Daten-Ausgabe-Verfahren gemäß einem Ausführungsbeispiel der Erfindung durchgeführten Verfahrensschritten;
- Fig. 3: eine schematische Detail-Darstellung der bei einer vorteilhaften Ausgestaltung der Erfindung verwendeten Daten-Ausgabe-Steuereinrichtungen, und Daten-Ausgabe-Kanäle; und
- Fig. 4: eine Einrichtung, insbesondere ein Rechner, zur Überwachung der Bereit- bzw. Zusammenstellung, bzw. der Weiterleitung der vom Daten-Ausgabe-System ausgegebenen Daten-Sätze.

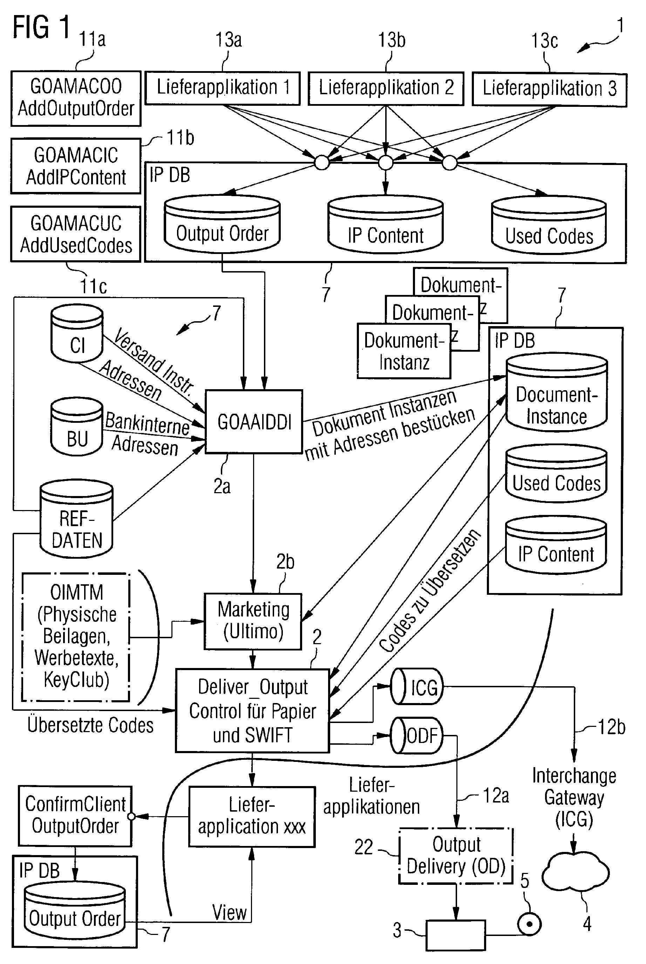

Gemäß Figur 1 weist ein Daten-Ausgabe-System 1 gemäß einem Ausführungsbeispiel der vorliegenden Erfindung eine oder mehrere Druckeinrichtungen 3, eine oder mehrere Datenbank-Einrichtungen 7, und - als Schnittstelle zwischen Druckeinrichtung 3, und Datenbank-Einrichtung 7 - eine oder mehrere Daten-Ausgabe-Steuereinrichtungen 2 auf.

Das Daten-Ausgabe-System 1 kann - vorzugsweise - zur Ausgabe von in einer Bank (oder z.B. auch einer Versicherung, etc.) anfallenden, bzw. von dort eingesetzten Rechnern erzeugten Daten verwendet werden.

Wie aus Figur 1 hervorgeht, weist das Daten-Ausgabe-System 1 mehrere (z.B. mehr als einen (oder alternativ z.B. mehr als zwei oder drei)) Daten-Ausgabe-Kanäle 12a, 12b auf, z.B. einen Druck-Daten-Ausgabe-Kanal 12a ("Papier-Kanal") (oder alternativ z.B. mehrere Druck-Daten-Ausgabe-Kanäle), und einen elektronischen Daten-Ausgabe-Kanal 12b ("SWIFT-Kanal") (oder alternativ z.B. mehrere elektronische Daten-Ausgabe-Kanäle).

Über den Druck-Daten-Ausgabe-Kanal 12a werden - gesteuert durch die Daten-Ausgabe-Steuereinrichtung 2 - entsprechende (unter Verwendung der o.g., in der Bank (oder Versicherung, etc.) anfallenden, bzw. von den dort eingesetzten Rechnern erzeugten Daten generierte) Ausgabe-Daten-Sätze an die Druckeinrichtung 3 geliefert.

Bei der Druckeinrichtung 3 kann es sich z.B. um eine entsprechende Rotationsdruckmaschine handeln, z.B. eine Bogen- oder - bevorzugt - um eine Rollen-Rotationsdruckmaschine 3 (z.B. um eine nach einem entsprechenden Hoch-, Flach-, oder Tiefdruckverfahren arbeitende (Ein- oder Mehrfarbendruck-) Rollen-Rotationsdruckmaschine).

Bei der Rollen-Rotationsdruckmaschine 3 läuft eine von einer entsprechenden Papier-Rolle 5 abgerollte, zusammenhängende Papier-Bahn durch die Maschine 3, und wird erst nach dem Bedrucken und Trocknen geschnitten, ggf. gefalzt, und verpackt (z.B. kuvertiert).

Alternativ oder zusätzlich zur Druckeinrichtung 3 werden die o.g. (und/oder weitere) Ausgabe-Daten-Sätze - ebenfalls gesteuert durch die Daten-Ausgabe-Steuereinrichtung 2 - über den elektronischen Daten-Ausgabe-Kanal 12b (auch) an ein oder mehrere elektronische Datenkommunikations-Systeme 4 geliefert, sodaß die Ausgabe-Daten-Sätze durch entsprechende System-Nutzer, insbesondere Bank-Kunden, und/oder Bank-Mitarbeiter elektronisch abgerufen werden können.

Der Abruf kann erst freigegeben werden, wenn von den System-Nutzern - über das Datenkommunikations-System 4 - entsprechende Passwörter, Kennungen etc. eingegeben worden sind, d.h. der jeweilige System-Nutzer entsprechend freigeschaltet worden ist.

Beim Datenkommunikations-System 4 kann es sich z.B. um ein oder mehrere Rechen-Netze handeln, z.B. das Internet, und/oder ein oder mehrere Intranets, und/oder um ein oder mehrere weitere, elektronische Datenkommunikations-Systeme, z.B. ein öffentliches oder privates Telefonnetz, z.B. Fest-Netz oder Mobilfunk-Netz, etc.

In den o.g. Datenbank-Einrichtungen 7 (z.B. einer Information Package Database ("IP DB"), etc.) können eine Vielzahl von Daten gespeichert sein, z.B. entsprechende Bank-Kundendaten (Client Information ("CI")) (z.B. Vor- und Nachnamen von Privatkunden, bzw. Firmennamen von Firmenkunden, Adressen, etc.), bankinterne Daten ("BU") (z.B. Vor- und Nachnamen von Bank-Mitarbeitern, bankinterne Adressen (Abteilung, Standort-Adresse, etc.)), Steuer-Daten ("Used Codes") (z.B. Informationen bzgl. der jeweils zu verwendenden Sprache, der jeweils zu verwendenden Daten, Prioritäts-Daten, etc., etc.), und/oder eine Vielzahl weiterer Daten, z.B. IP Content Daten, insbesondere entsprechende Nutzdaten (z.B. Kontostand-Daten, Konto-Bewegungs-Daten (Konto-Umbuchungs-Daten, Zins-Zahlungs-Daten, Konto-Dienstleistungspreis-Daten), etc., und/oder z.B. Depot-Stand-Daten, Depot-Bewegungs-Daten (Ankaufs-, Verkaufs-, Dividenden- / Zins-Zahlungs-Daten, Depot-Dienstleistungspreis-Daten) usw., usw.), Daten-Ausgabe-Auftrags-Daten ("Output Order"), etc., etc.

Die Änderung / Erzeugung / Ergänzung entsprechender Output-Order-, und Used-Code-Daten, etc. kann unter Steuerung entsprechender Service-Software-Programme bzw. -Programm-Module 11a, 11b, 11c, etc. erfolgen, und z.B. von entsprechenden Anfragen entsprechender Lieferapplikationen 13a, 13b, 13c (Lieferapplikation 1, Lieferapplikation 2, Lieferapplikation 3, etc.) getriggert werden.

Wie aus Figur 1 hervorgeht, werden aus den in der bzw. den Datenbank-Einrichtungen 7 gespeicherten Daten entsprechende Daten-Sätze enthaltende Daten-Satz-Druck-Files ("Dokumente") erzeugt, die - über den Druck-Daten-Ausgabe-Kanal 12a, und unter Steuerung durch die Daten-Ausgabe-Steuereinrichtung 2 - an die Druckeinrichtung 3 geliefert, und dort ausgedruckt werden.

Dabei können - wie ebenfalls aus Figur 1 hervorgeht (vgl. z.B. die dort gezeigten (von entsprechenden Software-Programmen bzw. -Programm-Modulen 2a, 2b durchgeführten bzw. veranlassten) Verfahrensschritte) - entsprechenden Nutzdaten (z.B. Kontostands-Daten, Konto-Bewegungs-Daten, oder Depot-Stand-Daten, Depot-Bewegungs-Daten, usw., usw.) entsprechende weitere Daten (z.B. bankinteme Daten, Bank-Kundendaten - insbesondere Adressen -, etc., etc.) hinzugefügt werden, und den so erzeugten Dokumenten - weitere - Daten, insbesondere - z.B. auf einer weiteren Datenbank-Einrichtung gespeicherte - Werbe-Daten (z.B. Werbetext-Daten, Daten für physikalische Beilagen, Kundenbindungsprogramm- ("KeyClub-") Daten, etc., etc.).

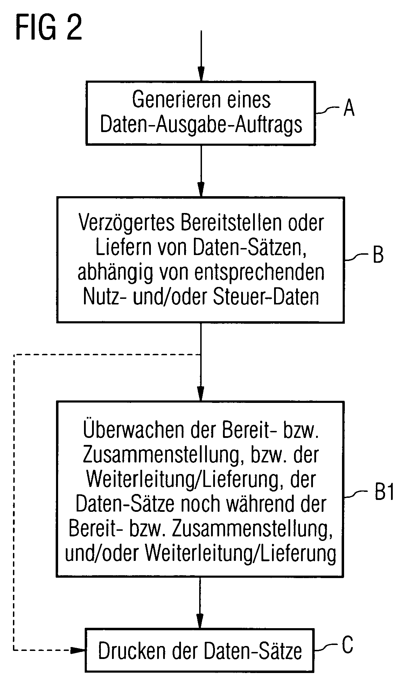

Die Triggerung entsprechender Daten-Ausgabe-Aufträge ("Output Order") für die o.g. Daten-Ausgabe-Kanäle 12a, 12b - z.B. durch eine entsprechende (Liefer- )Applikation - kann automatisch bzw. semi-automatisch erfolgen, z.B. Zeitgesteuert (z.B. jede Viertelstunde, jede Stunde, jeden Tag, jede Woche, jeden Monat, etc.), und/oder Bedingungs-gesteuert (z.B. durch einen Zinsabschluß), und/oder Zeit- und Bedingungs-gesteuert (z.B. eine bestimmte Zeit nach einem bestimmten Ereignis), und/oder kann - durch einen Bank-Mitarbeiter, und/oder einen Bank-Kunden, etc. - "von Hand" bzw. ad hoc ausgelöst werden (z.B. durch Eingabe eines entsprechenden Daten-Ausgabe-Auftrags an einem an das Daten-Ausgabe-System 1 angeschlossenen Rechner) - vgl. auch den in Figur 2 gezeigten Verfahrensschritt A.

Beim vorliegenden Ausführungsbeispiel werden - in Reaktion auf einen entsprechenden Daten-Ausgabe-Auftrag - die entsprechenden Daten-Sätze bzw. Daten-Satz-Druck-Files nicht bzw. nicht zwingend sofort bereit- bzw. zusammengestellt, und dann zum Drucken an die Druckeinrichtung 3 geliefert; stattdessen kann die Bereit- bzw. Zusammenstellung, und/oder die Lieferung der Daten-Sätze bzw. Daten-Satz-Druck-Files im Einzelfall - bewußt - verzögert erfolgen (z.B. verzögert um eine durch entsprechende Steuer-Daten vorbestimmte, oder - unter Verwendung der Nutz- und/oder Steuer-Daten berechnete - Verzögerungs-Zeitdauer (vgl. auch den in Figur 2 gezeigten Verfahrensschritt B)).

Die - vorbestimmte bzw. berechnete - (bewusst (zusätzlich zu systemimmanenten Verzögerungen) gewählte) Verzögerungs-Zeitdauer kann relativ groß sein, z.B. mehr als eine Stunde oder mehr als 24 Stunden, insbesondere mehr als eine oder mehrer Wochen betragen.

Die - verzögerte - Bereit- bzw. Zusammenstellung, und/oder - verzögerte - Lieferung der Daten-Sätze bzw. Daten-Satz-Druck-Files an die Druckeinrichtung 3 (wo die entsprechenden Daten-Sätze dann - verzögert - ausgedruckt werden (vgl. auch den in Figur 2 gezeigten Verfahrensschritt C)) kann z.B. in Abhängigkeit von die Auslastung der Druckeinrichtung 3 kennzeichnenden Steuer-Daten erfolgen, und/oder in Abhängigkeit von Steuer-Daten, die die Priorität eines (dem jeweiligen Daten-Satz zugeordneten) Nutzers (Bank-Kunden) kennzeichnen ("Nutzer-Prioritäts-Daten"), und/oder in Abhängigkeit von Steuer-Daten, die - Nutzerunabhängig - die Priorität des jeweiligen Daten-Satzes kennzeichnen ("Daten-Satz-Prioritäts-Daten"), etc., etc.

Durch eine - abhängig von der jeweiligen Auslastung der Druckeinrichtung 3, und der Nutzer- und/oder Daten-Satz-Priorität - flexibel gewählte Verzögerungs-Zeitdauer für den jeweiligen Daten-Satz kann erreicht werden, dass - auch zu "Stoßzeiten" (z.B. am Monats- oder Jahresende) - die Druckeinrichtung 3 nicht überlastet wird (da dann vorwiegend Daten-Sätze für Nutzer mit hohen Nutzer-Prioritäts-Daten, und/oder Daten-Sätze mit - unabhängig vom jeweiligen Nutzer - hohen Daten-Satz-Prioritäts-Daten gedruckt werden können).

Die die Priorität eines Nutzers kennzeichnenden Nutzer-Prioritäts-Daten können z.B. durch einen System-Administrator (insbesondere einen Bank-Mitarbeiter) definiert werden (z.B. durch Eingabe der entsprechenden Daten an einem an das Daten-Ausgabe-System 1 angeschlossenen Rechner (z.B. auf entsprechende Weisung des Kunden hin)), und/oder durch den jeweiligen Nutzer (insbesondere Bank-Kunden) selbst (z.B. ebenfalls durch Eingabe der entsprechenden Daten an einem an das Daten-Ausgabe-System 1 angeschlossenen Rechner (nachdem entsprechende Passwörter, Kennungen etc. eingegeben worden sind)), etc.

Die o.g. Daten-Ausgabe-Steuereinrichtung 2 kann so eingerichtet sein, dass die Bereitstellung / Lieferung der Daten-Sätze für Nutzer mit hoher Priorität - tendenziell - weniger stark verzögert wird, als die Bereitstellung / Lieferung der Daten-Sätze für Nutzer mit niedriger Priorität (und z.B. so, dass für Nutzer mit höchster Priorität die Daten-Sätze - falls möglich - unverzögert bereitgestellt / geliefert werden).

Entsprechend ähnlich kann die Daten-Ausgabe-Steuereinrichtung 2 so eingerichtet sein, dass die Bereitstellung / Lieferung von Daten-Sätzen mit - nutzerunabhängig - hoher Daten-Satz-Priorität - tendenziell - weniger stark verzögert wird, als die Bereitstellung / Lieferung von Daten-Sätzen mit - nutzerunabhängig - niedriger Daten-Satz-Priorität (und z.B. so, dass Daten-Sätze mit höchster Daten-Satz-Priorität - falls möglich, und unabhängig vom jeweils betroffenen Nutzer - unverzögert bereitgestellt / geliefert werden).

Bei Daten-Sätzen mit hoher bzw. höchster Priorität kann es sich z.B. um entsprechende, gesetzlich vorgeschriebene, oder vertraglich vereinbarte Endfristen auslösende Daten-Sätze handeln (z.B. um Konto-Abschluß-Daten enthaltende Daten-Sätze, etc.).

Die die Priorität eines Daten-Satzes (bzw. - bevorzugt - die Priorität einer Vielzahl gleichartiger Daten-Sätze) kennzeichnenden Prioritäts-Daten können z.B. durch einen System-Administrator (insbesondere einen Bank-Mitarbeiter) definiert, und an einem entsprechenden an das Daten-Ausgabe-System 1 angeschlossenen Rechner eingegeben werden.

Die o.g. - verzögerte - Bereit- bzw. Zusammenstellung, und/oder - verzögerte - Lieferung der Daten-Sätze bzw. Daten-Satz-Druck-Files an die Druckeinrichtung 3 kann - insbesondere für Nutzer mit eine niedrige Nutzer-Priorität kennzeichnenden Nutzer-Prioritäts-Daten, und/oder für Daten-Sätze mit eine niedrige Daten-Satz-Priorität kennzeichnenden Daten-Satz-Prioritäts-Daten - alternativ oder zusätzlich z.B. auch so erfolgen, dass - zunächst - einem Nutzer zugeordnete Ausgabe-Daten-Sätze gesammelt, und erst dann von der Daten-Ausgabe-Steuereinrichtungen 2 an die Druckeinrichtung 3 geliefert, und dort ausgedruckt werden, wenn die Gesamt-Datenmenge der dem Nutzer zugeordneten, gesammelten Ausgabe-Daten-Sätze eine vorbestimmte Mindest-Größe übersteigt, bzw. die in den gesammelten Ausgabe-Daten-Sätzen enthaltenen Daten beim Drucken eine vorbestimmte Mindest-Druckfläche überschreiten.

Hierbei kann die Mindest-Größe bzw. die Mindest-Druckfläche - wiederum - von den dem jeweiligen Nutzer zugeordneten Nutzer-Prioritäts-Daten abhängen.

Dadurch kann erreicht werden, dass - für ein- und denselben Kunden gleichzeitig - ein oder mehrere eine Vielzahl von Daten-Sätzen enthaltende Ausdrucke erstellt werden können, die in ein- und demselben Kuvert versendet werden können.

Dadurch können - in erheblichem Maß - Versandkosten eingespart werden.

Vorzugsweise werden zu diesem Zweck die einem bestimmten Nutzer zugeordnete Daten-Sätze so gesammelt, und an die Druckeinrichtung 3 geliefert, dass auf ein- und derselben Papier-Rolle 5 möglichst viele ein- und demselben Nutzer zugeordnete Ausgabe-Daten-Sätze gedruckt werden.

Bei einer bevorzugten Ausgestaltung des Daten-Ausgabe-Systems 1 werden die einem bestimmten Nutzer zugeordneten - gesammelten - Ausgabe-Daten-Sätze spätestens dann an die Druckeinrichtung 3 geliefert, und ausgedruckt, wenn seit der Anforderung des ersten - den jeweiligen Nutzer betreffenden - Ausgabe-Daten-Satzes (d.h. dem ersten Daten-Ausgabe-Auftrag) eine vorbestimmte Höchst-Zeitdauer vergangen ist.

Die Höchst-Zeitdauer kann - wiederum - abhängig von den dem jeweiligen Nutzer zugeordneten Nutzer-Prioritäts-Daten gewählt sein, und - insbesondere bei einem Nutzer mit eine hohe Nutzer-Priorität kennzeichnenden Nutzer-Prioritäts-Daten - z.B. kleiner-gleich 1 Woche, insbesondere kleiner-gleich 24 Stunden sein, bzw. - insbesondere bei einem Nutzer mit eine niedrige Nutzer-Priorität kennzeichnenden Nutzer-Prioritäts-Daten - größer als 24 Stunden, insbesondere größer als eine Woche sein (und z.B. kleiner als zwei Monate, insbesondere kleiner als einen Monat sein).

Dadurch kann verhindert werden, dass ein Nutzer zu lange auf die für ihn bestimmten, ihm zuzusendenden Daten (Konto-Auszüge, Depot-Auszüge, etc.) warten muß.

Die o.g. - verzögerte - Bereit- bzw. Zusammenstellung, und/oder - verzögerte - Lieferung der Daten-Sätze bzw. Daten-Satz-Druck-Files an die Druckeinrichtung 3 kann - alternativ oder zusätzlich zum oben Gesagten - z.B. auch in Abhängigkeit von der Kapazität der durch die Druckeinrichtung 3 bedruckten Papier-Rolle 5 erfolgen, etc., etc. Beispielsweise können die Daten-Sätze bzw. Daten-Satz-Druck-Files so bereit- bzw. zusammengestellt, und an die Druckeinrichtung 3 geliefert werden, dass eine Papier-Rolle 5 vollständig oder nahezu vollständig bedruckt wird.

Dadurch kann - insgesamt - eine kostengünstige, schnelle, Kapazitätsengpässe vermeidende, und dennoch spezifischen Kundenwünschen flexibel nachkommende Daten-Ausgabe erreicht werden.

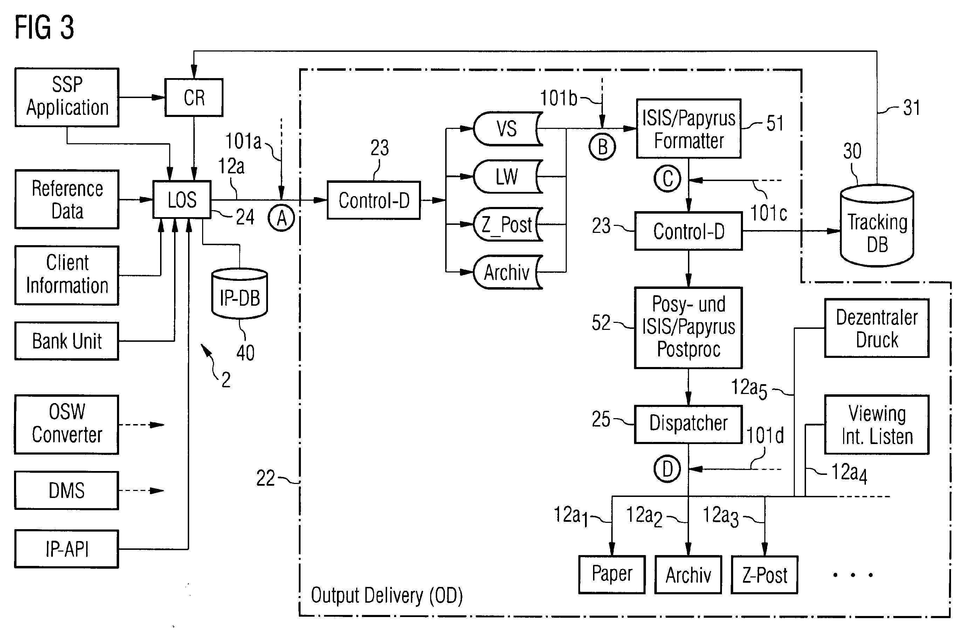

Bei einer vorteilhaften Ausgestaltung bzw. Weiterbildung des oben anhand von Figur 1 und 2 beschriebenen Daten-Ausgabe-Systems 1 bzw. -Verfahrens wird gemäß Figur 3 (und wie in Figur 1 gestrichelt dargestellt) die o.g. Daten-Ausgabe-Steuer-Funktion (insbesondere die Daten-Satz-Sammel- bzw. Weiterleitungs-Verzögerungs-Funktion, und im folgendenden noch genauer erläuterte (und ggf. weitere) Funktionen) nicht durch die o.g. Daten-Ausgabe-Steuereinrichtung 2 alleine, sondern durch die Daten-Ausgabe-Steuereinrichtung 2 (insbesondere ein oder mehrere dort vorgesehene Software-Programme bzw. -Programm-Module 24 ("LOS")), und eine mit der Daten-Ausgabe-Steuereinrichtung 2 zusammenwirkende - weitere - Daten-Ausgabe-Steuereinrichtung 22 wahrgenommen (insbesondere durch ein dort vorgesehenes Software-Programm bzw. -Programm-Modul 23 ("Control-D")).

Die weitere Daten-Ausgabe-Steuereinrichtung 22 kann z.B. entfernt (z.B. mehr als 10m, 1 km, etc. entfernt) von der Daten-Ausgabe-Steuereinrichtung 2 angeordnet sein, z.B. in der Nähe oder bei der o.g. Druckeinrichtung 3 (bzw. in einem Druckzentrum), und die Daten-Ausgabe-Steuereinrichtung 2 z.B. in einem Rechenzentrum, z.B. dem Rechenzentrum der das Daten-Ausgabe-Verfahren nutzenden Bank / Versicherung.

Wie aus Figur 3 hervorgeht, können die von der Daten-Ausgabe-Steuereinrichtung 22 - ggf. verzögert - bereitgestellten, bzw. - ggf. verzögert - gelieferten (d.h. vorher auf einer hier nicht gezeigten, mit der Daten-Ausgabe-Steuereinrichtung 22 verbundenen Speichereinrichtung zwischengespeicherten) Daten-Sätze bzw. Daten-Satz-Druck-Files z.B. an einen - mit der o.g. Druckeinrichtung 3 verbundenen - End-Daten-Ausgabe-Kanal 12a₁ "Paper" geliefert werden (und dann - entsprechend wie oben beschrieben - von der Druckeinrichtung 3 ausgedruckt werden).

Alternativ oder zusätzlich können - wie in Figur 3 dargestellt ist - die (z.B. auch an den End-Daten-Ausgabe-Kanal 12a₁ "Paper" (oder "Z_Post", etc.) gelieferten, z.B. von der Druckeinrichtung 3 ausgedruckten) Daten-Sätze bzw. Daten-Satz-Druck-Files z.B. auch an einen End-Daten-Ausgabe-Kanal 12a₂ "Archiv" geliefert werden. Die entsprechenden - in einem fertigen Druck-Format vorliegenden - Daten-Sätze bzw. Daten-Satz-Druck-Files können dann - zur Archivierung - (im o.g. Druck-Format, oder entsprechend komprimiert) in einer entsprechenden (hier nicht gezeigten) Datenbank dauerhaft abgespeichert werden (z.B. über eine gewisse Mindest-Zeitdauer, z.B. länger als 1 Monat, oder länger als 1 Jahr, insbesondere länger als 4 Jahre, etc.).

Alternativ oder zusätzlich können von der Daten-Ausgabe-Steuereinrichtung 22 - ggf. verzögert - auch Daten-Sätze bzw. Daten-Satz-Druck-Files an einen End-Daten-Ausgabe-Kanal 12a₃ "Z_Post" geliefert, und von der Druckeinrichtung 3 - oder einer weiteren Druckeinrichtung - gedruckt werden. Anders als z.B. beim o.g. End-Daten-Ausgabe-Kanal 12a₁ "Paper" werden beim End-Daten-Ausgabe-Kanal 12a₃ "Z_Post" die erstellten Ausdrucke nach dem Kuvertieren nicht extern verschickt, sondern "banklagernd" aufbewahrt, und vom jeweiligen Kunden selbst abgeholt.

Wie aus Figur 3 weiter hervorgeht, können alternativ oder zusätzlich von der Daten-Ausgabe-Steuereinrichtung 22 z.B. (ggf. auf verzögerte Weise) auch Daten-Sätze bzw. Daten-Satz-Druck-Files an einen End-Daten-Ausgabe-Kanal 12a₅ "Dezentraler Druck" geliefert, und dezentral an - von der Druckeinrichtung 3 unterschiedlichen, ggf. weit von dieser und/oder von der Daten-Ausgabe-Steuereinrichtung 22 entfernt angeordneten (z.B. mehr als 1 km, 10km oder 100km entfernt angeordneten) - weiteren Druckeinrichtungen ausgedruckt werden.

Alternativ oder zusätzlich können von der Daten-Ausgabe-Steuereinrichtung 22 entsprechende Daten-Sätze bzw. Daten-Satz-Druck-Files z.B. auch an einen End-Daten-Ausgabe-Kanal 12a₄ "Viewing, interne Listen" geliefert werden, in ein entsprechendes elektronisches Format (z.B. das pdf-Format) umgewandelt, und von Mitarbeitern der Bank bzw. Versicherung - lokal (d.h. entfernt von der o.g. Steuereinrichtung 22 und/oder von der o.g. Druckeinrichtung 3, z.B. mehr als 1 km, 10km oder 100km entfernt hiervon) - an einem dem jeweiligen Mitarbeiter oder der jeweiligen Mitarbeitergruppe zugeordneten Rechner (bzw. der diesem zugeordneten Druckeinrichtung) ausgedruckt werden.

Alternativ oder zusätzlich können entsprechende Daten-Sätze bzw. Daten-Satz-Druck-Files - wie aus Figur 3 hervorgeht jeweils gesteuert durch einen Dispatcher 25 - auch an einen oder mehrere weitere End-Daten-Ausgabe-Kanäle geliefert werden, z.B. an einen End-Daten-Ausgabe-Kanal "elektronische Post", etc.

Im Kanal "elektronische Post" können die Daten-Sätze in ein entsprechendes elektronisches Format (z.B. das pdf-Format) umgewandelt, und elektronisch, z.B. per e-mail (und beigefügter pdf-Datei) an die entsprechenden Kunden versandt, und von den Kunden lokal (d.h. entfernt von der o.g. Steuereinrichtung 22 und/oder von der o.g. Druckeinrichtung 3, z.B. mehr als 1km, 10km oder 100km entfernt hiervon) am Rechner des jeweiligen Kunden (bzw. an einer dem Rechner zugeordneten Druckeinrichtung) ausgedruckt werden. Alternativ oder zusätzlich kann der jeweilige Kunde die entsprechenden Daten auch über eine spezielle (von dem Kanal "elektronische Post" mit den entsprechenden Daten belieferte) - nur dem jeweiligen Kunden zugängliche bzw. passwortgeschützte - Internetseite abrufen, und - lokal - ausdrucken, etc.

Wie aus Figur 3 weiter hervorgeht, werden von der Daten-Ausgabe-Steuereinrichtung 22 (insbesondere durch das Software-Programm bzw. - Programm-Modul 23) Daten bezüglich der beim o.g. Daten-Ausgabe-Verfahren anfallenden Kosten, insbesondere ― für den End-Daten-Ausgabe-Kanal 12a₁, 12a₅, etc. - bezüglich der Anzahl / Porto-Kosten der an einen bestimmten Kunden verschickten Sendungen bzw. Kuverts (und/oder bezüglich der beim End-Daten-Ausgabe-Kanal "elektronische Post", und/oder "Z_Post", etc. für einen bestimmten Kunden anfallenden Kosten, etc.) in einer entsprechenden Speichereinrichtung 30 (tracking database ("tracking DB")) abgespeichert, und - über einen Kanal 31 - an die o.g. Steuereinrichtung 2 (insbesondere das Software-Programm bzw. - Programm-Modul 24 ("LOS")) geliefert, so dass den o.g. Daten-Sätzen - für den jeweiligen Kunden - entsprechende Daten-Ausgabe-Kosten-, insbesondere Porto-Daten hinzugefügt, und so diese Kosten an den Kunden weiterbelastet werden können.

Wie bereits erwähnt, wird bei der in Figur 3 gezeigten vorteilhaften Ausgestaltung der Erfindung die Daten-Ausgabe-Steuer-Funktion - gemeinsam - durch die Steuereinrichtung 2, und die Steuereinrichtung 22 erfüllt.

Wie aus Figur 3 hervorgeht, können die von der Daten-Ausgabe-Steuereinrichtung 2 bereitgestellten / gesammelten Daten-Sätze in einer mit der Daten-Ausgabe-Steuereinrichtung 2 verbundenen Speichereinrichtung 40 (hier: einer IP-Datenbank (IP-DB)) zwischengespeichert, wieder ausgelesen, und - wie oben erläutert ggf. verzögert - über den Kanal 12a an die Daten-Ausgabe-Steuereinrichtung 22, insbesondere das o.g. Software-Programm bzw. - Programm-Modul 23 weitergeleitet werden.

Wie ebenfalls in Figur 3 gezeigt ist, werden entsprechende, von dem Software-Programm bzw. -Programm-Modul 23 - ggf. verzögert (s.u.) - an ein entsprechendes Software-Programm bzw. -Programm-Modul 51 ("ISIS/PAPYRUS FORMATTER") weitergeleitete Daten-Sätze durch das Software-Programm bzw. -Programm-Modul 51 formatiert, und dann - in formatierter Form - an das o.g. Software-Programm bzw. -Programm-Modul 23 (zurück-) geliefert.

Die an das Software-Programm bzw. -Programm-Modul 23 (zurück-) gelieferten Daten-Sätze werden von dort aus - ggf. verzögert (s.u.) - an ein entsprechendes (weiteres) Software-Programm bzw. -Programm-Modul 52 ("POSY- und ISIS/PAPYRUS POSTPROCESSING") weitergeleitet, dort einem entsprechenden postprocessing-Verfahren unterzogen, und dann an den o.g. Dispatcher 25 weitergeleitet.

Wie bereits vorher erwähnt, können - auf entsprechend ähnliche Weise wie bei der Daten-Ausgabe-Steuereinrichtung 2 - durch das Software-Programm bzw. - Programm-Modul 23 entsprechende (z.B. von der Steuereinrichtung 2, und/oder dem Software-Programm bzw. -Programm-Modul 51 empfangene) Daten-Sätze in der bereits oben kurz erwähnten, mit der Daten-Ausgabe-Steuereinrichtung 22 (bzw. dem Software-Programm bzw. -Programm-Modul 23) verbundenen (hier nicht dargestellten) Speichereinrichtung zwischengespeichert werden. Dadurch ist es möglich, dass diese erst zu dem jeweils gewünschten Zeitpunkt, d.h. ggf. verzögert wieder ausgelesen, und - wie oben erläutert verzögert - von dem Software-Programm bzw. -Programm-Modul 23 an das Software-Programm bzw. - Programm-Modul 51, und/oder - insbesondere - das Software-Programm bzw. - Programm-Modul 52 weitergeleitet werden können.

Die durch die (weitere) Daten-Ausgabe-Steuereinrichtung 22 bzw. das Software-Programm bzw. -Programm-Modul 23 ("Control-D") höchstens bewirkte Verzögerung kann kleiner sein, als die durch die Daten-Ausgabe-Steuereinrichtung 2 ("LOS"-Modul 24) höchstens bewirkte Verzögerung (beispielsweise kann die durch die weitere Daten-Ausgabe-Steuereinrichtung 22 bzw. das Software-Programm bzw. -Programm-Modul 23 höchstens bewirkte Verzögerung kleiner als 1 Woche bzw. zwei Tage, z.B. kleiner als 28 Stunden sein (z.B. höchstens einen Tag), und die durch die Daten-Ausgabe-Steuereinrichtung 2 höchstens bewirkte Verzögerung größer als einen oder zwei Tage, bzw. 1 Woche (z.B. höchstens einen Monat)).

Beispielsweise können durch die Daten-Ausgabe-Steuereinrichtung 2 - insbesondere nach kundenspezifischen Wünschen, und bankfachlichen Kriterien - für einen bestimmten Kunden über einen bestimmten - relativ langen - Zeitraum (z.B. einen Monat) entsprechende Daten-Sätze (die in einem einzigen (Monats-) Sammelkuvert zu versenden sind) nach und nach gesammelt, und zwischengespeichert werden, und die zwischengespeicherten Daten-Sätze am Ende des o.g. Zeitraums - gemeinsam - an die weitere Daten-Ausgabe-Steuereinrichtung 22, insbesondere das Software-Programm bzw. -Programm-Modul 23 weitergeleitet werden.

Durch die weitere Daten-Ausgabe-Steuereinrichtung 22, insbesondere das Software-Programm bzw. -Programm-Modul 23 können dann entsprechend z.B. die innerhalb eines bestimmten - relativ kurzen - Zeitraums (z.B. innerhalb eines Tages) für ein- und denselben Kunden anfallenden (ggf. noch nicht gemeinsam angelieferten) Daten-Sätze zum Versand in einem einzigen (Tages-) Sammelkuvert nach und nach gesammelt, und zwischengespeichert werden, und die zwischengespeicherten Daten-Sätze am Ende des - relativ kurzen - Zeitraums gemeinsam weitergeleitet werden (insbesondere bei Kunden, für die keine Angaben vorliegen, welche Daten-Sätze vorab schon durch die Daten-Ausgabe-Steuereinrichtung 2 gesammelt werden können).

Dadurch kann erreicht werden, dass an jeden Kunden (auch an Kunden, für die in der Daten-Ausgabe-Steuereinrichtung 2 keine oder keine ausreichende Daten-Satz-Sammlung erfolgte) pro Tag nur möglichst wenige, insbesondere nur ein einziges Kuvert versendet werden muß.

Um Fehler bei der Bereit- bzw. Zusammenstellung, und/oder der Weiterleitung / Lieferung der Ausgabe-Daten-Sätze möglichst frühzeitig zu erkennen, und beheben zu können, kann - wie im folgenden noch genauer erläutert - beim Daten-Ausgabe-System 1 die Bereit- bzw. Zusammenstellung, und/oder die Weiterleitung / Lieferung der Ausgabe-Daten-Sätze überwacht werden, und zwar - wahlweise - an einem von mehreren Überwachungs-Punkten, z.B. den in Figur 3 schematisch gezeigten Überwachungs-Punkten A, B, C, D (oder alternativ gleichzeitig an mehreren der o.g. Überwachungs-Punkte A, B, C, D).

Beispielsweise können - an einem Überwachungs-Punkt A - die von der Daten-Ausgabe-Steuereinrichtung 2, insbesondere vom Software-Programm bzw. - Programm-Modul 24 ("LOS") auf die oben beschriebene Weise bereit- bzw. zusammengestellten, und z.B. in der o.g. Speichereinrichtung 40 (IP-Datenbank (IP-DB)) abgespeicherten, und/oder an die weitere Steuereinrichtung 22, insbesondere das Software-Programm bzw. -Programm-Modul 23 ("Control-D") weitergeleiteten Ausgabe-Daten-Sätze überwacht werden (oder - wie im folgenden noch genauer erläutert - bestimmte, wahlweise definierbare Teilmengen hiervon).

Alternativ oder zusätzlich können z.B. - an einem Überwachungs-Punkt B - die vom o.g. Software-Programm bzw. -Programm-Modul 23 auf die oben beschriebene Weise bereit- bzw. zusammengestellten, und z.B. in der o.g., mit diesem verbundenen, oder einer weiteren Speichereinrichtung abgespeicherten, und/oder an das Software-Programm bzw. -Programm-Modul 51 ("ISIS/PAPYRUS FORMATTER) weitergeleiteten Ausgabe-Daten-Sätze überwacht werden (oder wiederum - wie im folgenden noch genauer erläutert - bestimmte, wahlweise definierbare Teilmengen hiervon).

Wie weiter in Figur 3 gezeigt ist, können alternativ oder zusätzlich z.B. - an einem Überwachungs-Punkt C - die vom o.g. Software-Programm bzw. -Programm-Modul 51 bereit- bzw. zusammengestellten, und an das Software-Programm bzw. -Programm-Modul 23 ("Control D") gelieferten (und z.B. in der o.g., mit diesem verbundenen, oder einer weiteren Speichereinrichtung abgespeicherten) Ausgabe-Daten-Sätze überwacht werden (oder wiederum - wie im folgenden noch genauer erläutert - bestimmte, wahlweise definierbare Teilmengen hiervon).

Alternativ oder zusätzlich können z.B. auch an einem Überwachungs-Punkt D die vom o.g. Dispatcher 25 an die verschiedenen Daten-Ausgabe-Kanäle (12a₁, 12a₂ etc.) gelieferten (z.B. - kurzzeitig - in einer entsprechenden Speichereinrichtung des Dispatchers 25 zwischengespeicherten) Daten-Daten-Sätze überwacht werden (oder wiederum - wie im folgenden noch genauer erläutert - bestimmte, wahlweise definierbare Teilmengen hiervon), etc., etc.

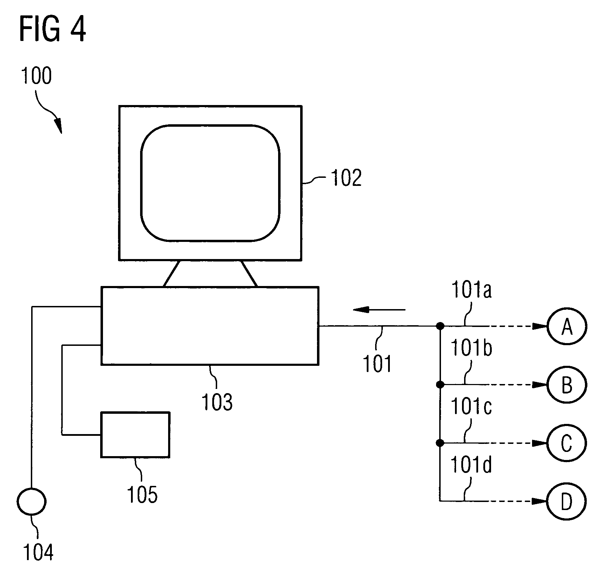

Zur Überwachung der Bereit- bzw. Zusammenstellung, und/oder der Weiterleitung / Lieferung der Ausgabe-Daten-Sätze können eine oder mehrere Überwachungs-Einrichtungen 100, z.B. entsprechende PCs, Workstations, etc. vorgesehen sein, die - wie in Figur 4 gezeigt - z.B. jeweils eine Anzeige-Einrichtung 102 (z.B. einen Bildschirm), eine - eine entsprechende Speichereinrichtung aufweisende - Rechner-Einrichtung 103, und entsprechende Eingabe-Mittel (z.B. eine Maus 104, und/oder eine Tastatur 105, etc.) aufweisen können.

Soll an einem bestimmten - von der die Einrichtung 100 bedienenden Person an der Überwachungs-Einrichtungen 100 ausgewählten - Überwachungs-Punkt A, B, C, D die Bereit- bzw. Zusammenstellung, und/oder die Weiterleitung / Lieferung der Ausgabe-Daten-Sätze (bzw. der von der die Einrichtung 100 bedienenden Person an der Überwachungs-Einrichtungen 100 ausgewählten Teilmenge hiervon) überwacht werden, werden - z.B. veranlasst durch ein entsprechendes, z.B. auf der Speichereinrichtung der Rechner-Einrichtung 103 gespeichertes (mit einem oder mehreren weiteren, hier nicht dargestellten Software-Modulen zusammenarbeitendes) Software-Modul - Kopien der entsprechenden, am jeweiligen Überwachungs-Punkt A, B, C, D bereit- bzw. zusammengestellten (z.B. auf der Speichereinrichtung 40, etc. abgespeicherten), bzw. der dort weitergeleiteten / gelieferten Daten-Sätze (bzw. der o.g. Teilmenge hiervon) über entsprechende Leitungen bzw. Kanäle 101a, 101b, 101c, 101d, und die mit der Überwachungs-Einrichtung 100 verbundene Leitung 101 (bzw. den Kanal 101) an die jeweils anfragende Überwachungs-Einrichtung 100 weitergeleitet, und an der Anzeige-Einrichtung 102 angezeigt.

Als Ausgabe-Daten-Satz-Teilmenge können von der die Einrichtung 100 bedienenden Person z.B. die jeweils einem bestimmten Daten-Ausgabe-Kanal (z.B. dem Daten-Ausgabe-Kanal 12a₁, oder alternativ dem Daten-Ausgabe-Kanal 12a₂) zugeordneten Ausgabe-Daten-Sätze ausgewählt werden, so dass lediglich diese Daten-Sätze (nicht aber die - den übrigen Kanälen 12a₂, etc. zugeordneten - übrigen Daten-Sätze) vom jeweiligen Überwachungs-Punkt A, B, C, D aus an die Einrichtung 100 weitergeleitet, und an der Anzeige-Einrichtung 102 angezeigt werden.

Zur Definition der Teilmenge können - alternativ oder zusätzlich zur Kanal-Information - von der die Einrichtung 100 bedienenden Person wahlweise z.B. auch den jeweiligen Report (z.B. Zinsabschluß, Kontoauszug, etc.), und/oder die VE (d.h. die jeweilige (Bank-)Verarbeitungseinheit, bzw. die jeweilige geographische Niederlassungs-Gruppe), und/oder die jeweilige Datenbank-Partition, etc. auswählende Filter- bzw. Ausgabe-Daten-Satz-Auswahl-Kriterien verwendet werden.

Durch das Überwachen der Bereit- bzw. Zusammenstellung, und/oder der Weiterleitung / Lieferung der Ausgabe-Daten-Sätze an die Druckeinrichtung 3 (insbesondere noch während der o.g. Bereit- bzw. Zusammenstellungs-, und/oder Weiterleitungs- / Lieferungsprozesse (vgl. auch den in Figur 2 gezeigten Verfahrensschritt B1)) können ggf. auftretende Fehler frühzeitig - noch vor dem Ausdrucken der Daten-Sätze - erkannt, und behoben werden.

## Patentansprüche

1. Daten-Ausgabe-System (1), welches aufweist:
- eine Druckeinrichtung (3);
- eine Datenbank-Einrichtung (7), in welcher für eine Vielzahl von Daten-Ausgabe-System-Nutzern entsprechende Nutz- und/oder Steuerdaten gespeichert sind;
- eine Daten-Ausgabe-Steuereinrichtung (2), welche entsprechende Ausgabe-Daten-Sätze bereit- bzw. zusammenstellt, und an die Druckeinrichtung (3) liefert; und
- eine Einrichtung (100) zum Überwachung der Bereit- bzw. Zusammenstellung, und/oder der Weiterleitung bzw. Lieferung der Ausgabe-Daten-Sätze an die Druckeinrichtung (3).

2. Daten-Ausgabe-System (1) nach Anspruch 1, bei welchem der Zeitpunkt der Lieferung der Ausgabe-Daten-Sätze von den Nutz- und/oder Steuerdaten abhängt.

3. Daten-Ausgabe-System (1) nach Anspruch 1 oder 2, bei welchem - abhängig von den Nutz- und/oder Steuerdaten - eine verzögerte Lieferung der Ausgabe-Daten-Sätze durch die Daten-Ausgabe-Steuereinrichtung (2) erfolgen kann.

4. Daten-Ausgabe-System (1) nach Anspruch 3, bei welchem die Verzögerung mehr als eine Stunde oder mehr als 24 Stunden, insbesondere mehr als eine Woche betragen kann.

5. Daten-Ausgabe-System (1) nach einem der Ansprüche 1 bis 4, welches eine weitere Daten-Ausgabe-Steuereinrichtung (22) aufweist, welche von der Daten-Ausgabe-Steuereinrichtung (2) erhaltene Ausgabe-Daten-Sätze an die Druckeinrichtung (3) liefert.

6. Daten-Ausgabe-System (1) nach Anspruch 5, bei welchem - abhängig von den Nutz- und/oder Steuerdaten - eine verzögerte Lieferung der Ausgabe-Daten-Sätze durch die weitere Daten-Ausgabe-Steuereinrichtung (22) an die Druckeinrichtung (3) erfolgen kann.

7. Daten-Ausgabe-System (1) nach Anspruch 5 oder 6, bei welchem die Einrichtung (100) so ausgestaltet und eingerichtet ist, dass mit dieser die Lieferung der Daten-Sätze von der Daten-Ausgabe-Steuereinrichtung (2) an die weitere Daten-Ausgabe-Steuereinrichtung (22) überwacht werden kann, bzw. von der Einrichtung (100) von der Daten-Ausgabe-Steuereinrichtung (2) an die weitere Daten-Ausgabe-Steuereinrichtung (22) gelieferte Daten-Sätze angezeigt werden können.

8. Daten-Ausgabe-System (1) nach Anspruch 5, 6 oder 7, bei welchem die Einrichtung (100) so ausgestaltet und eingerichtet ist, dass mit dieser die Lieferung der Daten-Sätze von der weiteren Daten-Ausgabe-Steuereinrichtung (22) an die Druckeinrichtung (3) überwacht werden kann, bzw. von der Einrichtung (100) von der weiteren Daten-Ausgabe-Steuereinrichtung (22) an die Druckeinrichtung (3) gelieferte Daten-Sätze angezeigt werden können.

9. Daten-Ausgabe-System (1) nach einem der vorhergehenden Ansprüche, welches außerdem Mittel (51) aufweist zum Formatieren, und Weiterleiten der Daten-Sätze.

10. Daten-Ausgabe-System (1) nach Anspruch 9, bei welchem die Einrichtung (100) so ausgestaltet und eingerichtet ist, dass mit dieser die Weiterleitung der - formatierten - Daten-Sätze überwacht werden kann, bzw. von der Einrichtung (100) die weitergeleiteten - formatierten - Daten-Sätze angezeigt werden können.

11. Daten-Ausgabe-System (1) nach einem der vorhergehenden Ansprüche, welches außerdem Mittel (25) aufweist zum Weiterleiten der Daten-Sätze an einen von mehreren Daten-Ausgabe-Kanälen (12a₁, 12a₂).

12. Daten-Ausgabe-System (1) nach Anspruch 11, bei welchem die Einrichtung (100) so ausgestaltet und eingerichtet ist, dass mit dieser die Weiterleitung der Daten-Sätze an den entsprechenden Daten-Ausgabe-Kanal überwacht werden kann, bzw. von der Einrichtung (100) die an den entsprechenden Daten-Ausgabe-Kanal (12a₁, 12a₂) weitergeleiteten Daten-Sätze angezeigt werden können.

13. Daten-Ausgabe-System (1) nach einem der vorhergehenden Ansprüche, bei welchem einem bestimmten Nutzer zugeordnete Ausgabe-Daten-Sätze gesammelt, und erst bzw. spätestens dann an die Druckeinrichtung (3) geliefert werden, wenn seit der Bereitstellung der Ausgabe-Daten-Sätze eine vorbestimmte Höchst-Zeitdauer vergangen ist.

14. Daten-Ausgabe-System (1) nach einem der vorhergehenden Ansprüche, bei welchem die Lieferung, insbesondere verzögerte Lieferung der Ausgabe-Daten-Sätze an die Druckeinrichtung (3) in Abhängigkeit von der Kapazität einer durch die Druckeinrichtung (3) bedruckten Papier-Rolle (5) erfolgt, insbesondere so, dass mit den jeweils gelieferten Ausgabe-Daten-Sätzen die Papier-Rolle (5) voll bedruckt wird.

15. Daten-Ausgabe-System (1) nach einem der vorhergehenden Ansprüche, bei welchem einem Nutzer zugeordnete Ausgabe-Daten-Sätze gesammelt, und so an die Druckeinrichtung (3) geliefert werden, dass auf ein- und derselben Papier-Rolle (5) möglichst viele ein- und demselben Nutzer zugeordnete Ausgabe-Daten-Sätze gedruckt werden.

16. Daten-Ausgabe-Verfahren, insbesondere unter Verwendung eines Daten-Ausgabe-Systems (1) nach einem der Ansprüche 1 bis 15, mit einer Druckeinrichtung (3), einer Datenbank-Einrichtung (7), in welcher für eine Vielzahl von Nutzern entsprechende Nutz- und/oder Steuerdaten gespeichert sind, und einer Daten-Ausgabe-Steuereinrichtung (2), welche entsprechende Ausgabe-Daten-Sätze bereit- bzw. zusammenstellt, und an die Druckeinrichtung (3) liefert, wobei das Verfahren die Schritte aufweist:
- Lieferung der Ausgabe-Daten-Sätze in Abhängigkeit von den Nutz- und/oder Steuerdaten; und
- Überwachen der Bereit- bzw. Zusammenstellung, und/oder der Lieferung der Ausgabe-Daten-Sätze an die Druckeinrichtung (3).

17. Computer-Programm mit Programm-Code-Mitteln zum Durchführen der in Anspruch 16 angegebenen Verfahrensschritte, wenn das Programm auf einem Computer ausgeführt wird.

18. Computer-Programm mit Programm-Code-Mitteln nach Anspruch 17, welches auf einem computerlesbaren Speichermedium gespeichert ist.
